# NEUE EUROPÄISCHE PATENTSCHRIFT

(11) **EP 2 996 520 B2**
(45) Veröffentlichungstag und Bekanntmachung des Hinweises auf die Entscheidung über den Einspruch: **24.06.2020**
(45) Hinweis auf die Patenterteilung: 22.03.2017
(21) Anmeldenummer: 13725106.2
(22) Anmeldetag: 14.05.2013
(51) Int. Cl.: A47J 31/36

(54) **BRÜHMODUL UND SYSTEM ZUM ZUBEREITEN EINES GETRÄNKS**
BREWING MODULE AND SYSTEM FOR PREPARING A BEVERAGE
MODULE D'INFUSION ET SYSTÈME DE PRÉPARATION D'UNE BOISSON

(43) Veröffentlichungstag der Anmeldung: 23.03.2016
(73) Patentinhaber: Delica AG, 4127 Birsfelden (CH)
(72) Erfinder: AFFOLTER, Roland, CH-5103 Möriken-Wildegg (CH); BRÖNNIMANN, Markus, CH-3274 Hermrigen (CH)
(74) Vertreter: Hepp Wenger Ryffel AG
(86) Internationale Anmeldenummer: PCT/EP2013/059915
(87) Internationale Veröffentlichungsnummer: WO 2014/183783

(56) Entgegenhaltungen:
- EP-B1- 1 757 212
- WO-A1-2010/004376
- WO-A1-2011/121125
- US-A1- 2008 006 159
- US-A1- 2011 000 377

## Beschreibung

Die vorliegende Erfindung betrifft ein Brühmodul und ein System zum Zubereiten eines Getränks aus einer in einer Portionsverpackung enthaltenen Substanz gemäss dem Oberbegriff der unabhängigen Ansprüche. Derartige Vorrichtungen werden seit längerer Zeit beispielsweise für die Herstellung von Kaffee oder von Tee eingesetzt. Bei den Portionsverpackungen handelt es sich oft um Kapseln, die als relativ starre, topfartige Behältnisse beispielsweise aus Kunststoffmaterial, aus Aluminium oder einem Laminat hergestellt sind. Derartige Kapseln sind beispielsweise aus der DE 27 52 733 bekannt.

Aus der EP 1 757 212 B1 ist ein Brühmodul bekannt, bei dem eine Kapsel in einer Aufnahmekammer einschliessbar ist. Die Aufnahmekammer besteht aus zwei Kammerteilen, die in einer Schliessstellung gegeneinander pressbar sind zur Bildung der Aufnahmekammer, wobei in einer Offenstellung die Kapsel einsetzbar ist. Zum Bewegen eines der Kammerteile aus der Offenstellung in die Schliessstellung weist das Brühmodul eine Betätigungseinrichtung mit einem Kniehebelgetriebe auf, wobei zum Erreichen der Schliessstellung ein Totpunkt überfahren wird und das Getriebe zum Halten der Schliessstellung selbsthemmend ist.

Dieser vorbekannte Stand der Technik weist jedoch den Nachteil auf, dass in der Schliessstellung eine grosse Kraft auf eine feste Getriebeachse der Betätigungseinrichtung und ein Gestell des Brühmoduls wirkt. Dies bedingt eine entsprechend stabile und damit kostspielige Bauweise des Brühmoduls, um eine zuverlässige Abdichtung der Aufnahmekammer im Betrieb bei den insbesondere zur Kaffeeherstellung verwendeten hohen Drücken zu erreichen. Zudem ist eine hohe Fertigungsgenauigkeit aller Teile der Betätigungseinrichtung sowie auch der Kammerteile notwendig zur Erreichung der Abdichtung der Aufnahmekammer im Betrieb, weil sich die Toleranzen der Getriebeglieder addieren. Zudem ist eine hohe Schliesskraft zur Abdichtung der Aufnahmekammer erforderlich.

Es ist daher eine Aufgabe der vorliegenden Erfindung, die Nachteile des Bekannten zu vermeiden, insbesondere also ein Brühmodul bereitzustellen, das kostengünstig herstellbar ist, geringere Schliesskräfte zur Schliessung der Aufnahmekammer durch den Bediener erfordert, die Toleranzkette über die Getriebeglieder minimiert und einen geringeren Verschleiss der Mechanik im Betrieb aufweist. Diese Aufgaben werden durch ein Brühmodul mit den Merkmalen des unabhängigen Anspruchs 1 gelöst.

Das erfindungsgemässe Brühmodul ist geeignet zum Zubereiten eines Getränks aus einer in einer Portionsverpackung enthaltenen Substanz mit einem flüssigen Medium. Insbesondere ist die Portionsverpackung eine Kapsel. Das Brühmodul umfasst ein Gestell, in dem ein erstes Kammerteil und ein zweites Kammerteil angeordnet sind, wobei die zwei Kammerteile mittels einer Betätigungseinrichtung zwischen einer Offenstellung und einer Schliessstellung relativ zueinander beweglich sind. Das Gestell umfasst insbesondere zumindest eine Wand und bevorzugt zumindest eine Seitenwand. In der Schliessstellung sind die zwei Kammerteile mittels einer Anpresskraft unter Vorspannung gegeneinander pressbar zur Bildung einer Aufnahmekammer für die Portionsverpackung. Die Aufnahmekammer weist wenigstens eine Eintrittsöffnung und wenigstens eine Austrittsöffnung auf. Das flüssige Medium ist in der Schliessstellung durch die Portionsverpackung durchleitbar. Die Betätigungseinrichtung weist ein Getriebe mit einem Antriebsglied und einem Abtriebsglied auf, wobei das Getriebe und das Gestell derart miteinander verrastbar sind, dass in der Schliessstellung S die Anpresskraft A im Wesentlichen durch das Gestell aufnehmbar ist. In der Schliessstellung ist ein zwischen dem Antriebsglied und dem Abtriebsglied angeordnetes Getriebeglied von der Anpresskraft im Wesentlichen entkoppelt. Das zwischen dem Antriebsglied und dem Abtriebsglied angeordnete Getriebeglied ist insbesondere eine feste Getriebeachse. Insbesondere ist das Abtriebsglied mit dem Gestell verrastbar.

Dies hat den Vorteil, dass die Anpresskraft in der Schliessstellung in einem definierten Bereich von dem Gestell des Brühmoduls aufgenommen wird und nicht beispielsweise von der festen Getriebeachse. Somit kann der von der Anpresskraft entkoppelte Bereich des Brühmoduls weniger steif ausgelegt werden, was die Herstellungskosten verringert. Zudem ist es ausreichend im Wesentlichen nur die Teile, die die Position des beweglichen Kammerteils in der Schliessstellung bestimmen, mit genauen Fertigungstoleranzen herzustellen. Es müssen also beispielsweise gegenüber dem Stand der Technik weniger Teile hochgenau gefertigt werden. Zudem kann eine entsprechend in der Aufnahmekammer angeordnete Dichtung zur Abdichtung der Aufnahmekammer in der Schliessstellung gegenüber dem Stand der Technik dünner ausgelegt werden, da durch die besser definierte Aufnahme im Brühmodul geringere Toleranzen durch die Dichtung überbrückt werden müssen.

Das Getriebe ist als ein Gelenk mit einem Hebelarm ausgebildet. Insbesondere ist das Gelenk ein Kniehebelgelenk. Insbesondere ist der Hebelarm als das mit einem der Kammerteile verbundene Abtriebsglied ausgebildet. Die Verwendung eines Gelenks und insbesondere eines Kniehebelgelenks hat den Vorteil, dass dieses in der Herstellung kostengünstig realisierbar ist und im Betrieb zuverlässig ist zum Öffnen und Schliessen der Aufnahmekammer.

Der Hebelarm ist schwimmend gelagert. Insbesondere ist der mit einem der Kammerteile verbundene Hebelarm schwimmend gelagert.

Dies hat den Vorteil, dass die Entkopplung des zwischen dem Antriebsglied und dem Abtriebsglied angeordneten Getriebeglieds von der Anpresskraft in der Schliessstellung kostengünstig und zuverlässig erzielbar ist zur Erreichung der oben beschriebenen Vorteile.

Bevorzugt ist der Hebelarm an einer ersten Drehachse und/oder an einer zweiten Drehachse schwimmend gelagert. Dies hat den Vorteil der möglichen Anpassung der Ausgestaltung der schwimmenden Lagerung an Anforderungen an das jeweilige Brühmodul.

Bevorzugt ist der Hebelarm im Wesentlichen parallel zur Längsachse des Hebelarms schwimmend gelagert. Insbesondere ist der Hebelarm im Wesentlichen senkrecht zur Längsachse des Hebelarms nicht schwimmend gelagert. Dadurch ist die Bewegung eines der Kammerteile in die Schliessposition zuverlässig erzielbar, wobei in der Schliessposition die Längsachse des Hebelarms im Wesentlichen parallel zur Anpresskraft liegt und somit eine zuverlässige Entkopplung der festen Getriebeachse des Kniehebelgelenks von der Anpresskraft erreicht wird.

Am und/oder im Hebelarm ist zumindest ein Dämpfungselement angeordnet zur Dämpfung des Spiels des Hebelarms durch die schwimmende Lagerung. Bevorzugt ist zumindest ein Dämpfungselement an der ersten Drehachse und/oder an der zweiten Drehachse angeordnet. Insbesondere umfasst das zumindest eine Dämpfungselement ein elastisches Material, bevorzugt Kautschuk.

Dies hat den Vorteil, dass für einen Bediener des Brühmoduls, durch den eines der Kammerteile in die Schliessstellung bewegt wird, die schwimmende Lagerung kaum oder gar nicht detektierbar ist, was die Bedienerfreundlichkeit der Vorrichtung verbessert.

Bevorzugt ist am Hebelarm zumindest ein Verrastglied, insbesondere ein Nocken, angeordnet. Das Verrastglied steht mit einer an dem Gestell angeordneten Verrasteinrichtung für das Verrastglied zumindest in der Schliessstellung in Wirkverbindung zum Verrasten des Getriebes mit dem Gestell.

Dadurch kann durch die Wirkverbindung wie beispielsweise einer mechanischen Kopplung des Nockens mit der Verrasteinrichtung die Anpresskraft durch das Gestell aufgenommen werden und die Entkopplung des zwischen dem Antriebsglied und dem Abtriebsglied angeordneten Getriebeglieds kann zuverlässig und kostengünstig erreicht werden.

Bevorzugt ist die Verrasteinrichtung derart ausgebildet, dass in der Schliessstellung das Verrastglied und die Verrasteinrichtung im Formschluss zueinander angeordnet sind zur zumindest teilweisen Aufnahme der Anpresskraft. So wird eine konstruktiv einfach ausgestaltete und zuverlässig funktionierende Entkoppelung erreicht.

Bevorzugt ist die Verrasteinrichtung als insbesondere kurvenbahnförmige Ausnehmung für das Verrastglied in dem Gestell ausgebildet. Auf diese Weise muss keine zusätzliche Verrasteinrichtung im Brühmodul für das Verrastglied angeordnet werden.

Bevorzugt ist die Verrasteinrichtung als insbesondere kurvenflankenförmiger Anschlag für das Verrastglied ausgebildet, wodurch das Gestell zumindest im Bereich des Anschlags versteift wird.

Bevorzugt ist der Anschlag fest mit dem Gestell verbunden. Insbesondere ist der Anschlag einstückig mit dem Gestell ausgebildet. Bevorzugt ist der Anschlag mittels eines Spritzgussverfahrens hergestellt.

Dies hat den Vorteil, dass die feste Anordnung des Anschlags an dem Gestell im Betrieb noch zuverlässiger ist. Insbesondere die einstückige Ausbildung von Anschlag und Gestell hat den Vorteil, dass die Herstellungskosten weiter verringert werden können, insbesondere bei Verwendung eines Spritzgussverfahrens zur Herstellung des Anschlags an dem Gestell.

Alternativ ist es selbstverständlich auch denkbar, dass derAnschlag lösbar mit dem Gestell verbunden ist, beispielsweise mittels einer Schraubverbindung und/oder einer Klemmverbindung. So ist der Anschlag in seiner Position und/oder Ausrichtung an dem Gestell justierbar und bei Verschleiss einfach austauschbar. Auch kann anstelle des fixen Anschlages eine Rolle an dieser Stelle montiert werden um den Verschleiss und die Betätigungskraft zu minimieren.

Bevorzugt ist am Hebelarm und/oder an dem mit dem Hebelarm verbundenen Kammerteil ein elastisches Element zur Aufrechterhaltung einer minimalen Anpresskraft derart angeordnet, dass die Aufnahmekammer mit oder ohne in der Aufnahmekammer eingesetzter Portionsverpackung in der Schliessstellung abdichtbar ist.

Damit wird erreicht, dass eine Abdichtung der Aufnahmekammer bei eingesetzter Portionsverpackung abdichtbar ist, sodass ein Getränk herstellbar ist. Hierbei wird ja üblicherweise ein umlaufender Flansch der Kapsel, die in der Aufnahmekammer aufgenommen ist, zwischen den zwei Kammerteilen eingeklemmt, wodurch die Aufnahmekammer durch die Anpresskraft abgedichtet wird. Ist in der Aufnahmekammer keine Portionsverpackung eingesetzt, kann die Aufnahmekammer mittels Aufrechterhaltung einer minimalen Anpresskraft durch das elastische Element abgedichtet werden, so dass beispielsweise eine Spülung bzw. Reinigung des Brühmoduls und insbesondere der Aufnahmekammer erfolgen kann.

Bevorzugt weist der Hebelarm an dem dem Kammerteil zugewandten Ende einen Vorsprung auf. Bevorzugt ist das elastische Element an dem Kammerteil angeordnet, wobei der Vorsprung in einem Abschnitt während der Bewegung in die Schliessstellung mit dem elastischen Element wechselwirkt und dieses zumindest teilweise komprimiert.

Dies hat den Vorteil, dass der Vorsprung am Hebelarm so auslegbar ist, dass eine Wechselwirkung zwischen elastischem Element und Hebelarm nur in einem bestimmten Bewegungsabschnitt des Hebelarms erfolgt, was die Handhabung der Vorrichtung im Betrieb einfacher und zuverlässiger macht. Zudem ist gegebenenfalls eine kompaktere Bauweise des Brühmoduls möglich, da die Länge des Hebelarms, die Lage der Drehachsen und die Ausgestaltung des Vorsprungs in Abhängigen von den Anforderungen an das Brühmodul anpassbar sind. Insbesondere ist der Vorsprung zwischen der Drehachse des Hebelarms, die dem Kammerteil zugewandt ist, und dem Kammerteil angeordnet.

Bevorzugt ist das elastische Element an dem Vorsprung angeordnet, wobei das elastische Element zumindest in einem Abschnitt während der Bewegung in die Schliessstellung mit dem Kammerteil wechselwirkt und das elastische Element zumindest teilweise komprimiert.

Dadurch kann das mit dem Hebelarm verbundene Kammerteil einfacher ausgestaltet werden, was kostengünstig ist.

Ein weiterer Aspekt der vorliegenden Erfindung betrifft ein System umfassend eine Kapsel und ein Brühmodul wie vorstehend beschrieben zum Zubereiten eines Getränks aus einer in der Kapsel enthaltenen Substanz.

Ein weiterer Aspekt der vorliegenden Erfindung betrifft die Verwendung einer Kapsel mit einem Flansch enthaltend eine Substanz zum Zubereiten eines Getränks, insbesondere von Kaffee oder Tee, mittels einer Flüssigkeit in einem Brühmodul wie vorstehend beschrieben.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1: Perspektivische Ansicht eines Teils eines erfindungsgemässen Brühmoduls in einer Offenstellung;
- Figur 2: Perspektivische Ansicht des erfindungsgemässen Brühmoduls gemäss Figur 1 in einer Schliessstellung;
- Figur 3: Teilgeschnittene Seitenansicht des erfindungsgemässen Brühmoduls gemäss Figur 1 in der Offenstellung;
- Figur 4: Seitenansicht des erfindungsgemässen Brühmoduls gemäss Figur 1 in der Offenstellung mit in einer Seitenwand angeordneten kurvenbahnförmigen Ausnehmung;
- Figur 5: Seitenansicht des Brühmoduls gemäss Figur 4 in einer Zwischenstellung;
- Figur 6: Seitenansicht des Brühmoduls gemäss Figur 4 in der Schliessstellung;
- Figur 7: Seitenansicht eines Ausschnitts des erfindungsgemässen Brühmoduls gemäss Figur 1 mit einem elastischem Element in einer ersten Stellung;
- Figur 8: Seitenansicht des Brühmoduls gemäss Figur 7 in einer weiteren Stellung;
- Figur 9: Seitenansicht des Ausschnitts des Brühmoduls gemäss Figur 7 in der Schliessstellung;
- Figur 10: Schematische Darstellung eines alternativen erfindungsgemässen Brühmoduls mit einem Anschlag.

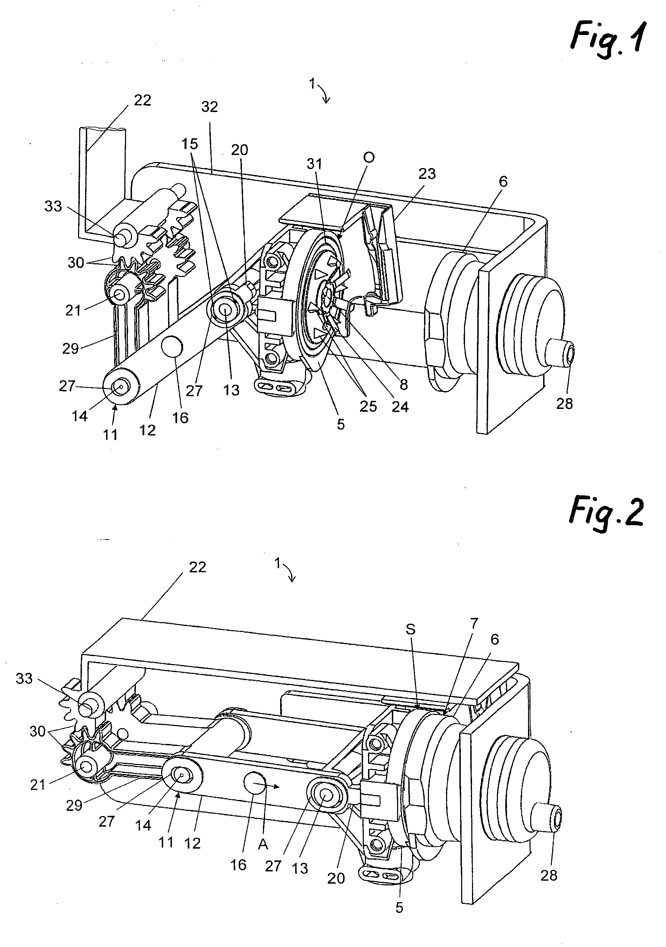

In Figur 1 ist in perspektivischer Darstellung ein Teil eines erfindungsgemässen Brühmoduls 1 dargestellt. In der Darstellung wurde unter anderem eine Seitenwand weggelassen zur Sichtbarmachung der Funktionsweise des Brühmoduls.

Das Brühmodul 1 weist ein Gestell 32 mit einer Betätigungseinrichtung mit einem Betätigungshebel 22, einem Zahnradgetriebe 30 und einem Kniehebelgelenk 11 auf. Der Betätigungshebel 22 ist im Gestell 32 an einer Betätigungshebelachse 33 angelenkt. Mittels Betätigung des Betätigungshebels 22 sind das Zahnradgetriebe 30 und das Kniehebelgelenk 11 umfassend einen Hebelarm 12 und einen weiteren Hebelarm 29 antreibbar. Der Hebelarm 12 ist als Abtriebsglied ausgebildet und der Betätigungshebel 22 als Antriebsglied. Das Kniehebelgelenk 11 ist an einer festen Getriebeachse 21 gelagert. Der weitere Hebelarm 29 des Kniehebelgelenks 11 ist mit dem Hebelarm 12 an einer zweiten Drehachse 14 angelenkt. Der Hebelarm 12 des Kniehebelgelenks 11 ist weiter an einer ersten Drehachse 13 mit einem als Injektor ausgebildeten ersten Kammerteil 5 angelenkt. Mittels Betätigung des Betätigungshebels 22 und damit des Kniehebelgelenks 11 ist das erste Kammerteil 5 aus einer Offenstellung O in eine Schliessstellung zum zweiten Kammerteil 6 bewegbar zur Bildung einer Aufnahmekammer.

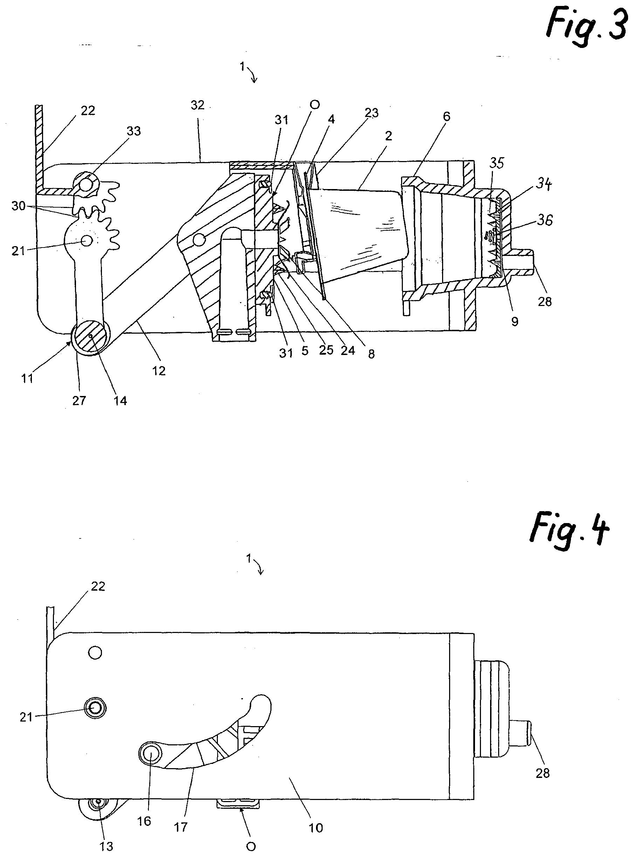

In der Offenstellung O ist in einer Positioniereinheit 23 eine Kapsel einsetzbar und festhaltbar, sodass die Kapsel 2 (Figur 3) während der Bewegung des Injektors von der Offenstellung O in die Schliessstellung durch den Injektor und das zweite Kammerteil 6 aufnehmbar ist.

Der Injektor umfasst eine Penetriereinrichtung 25 zum Penetrieren der Kapsel, sodass durch die Eintrittsöffnung 8 ein flüssiges Medium wie beispielsweise erhitztes Wasser in die Kapsel förderbar ist. Am Injektor ist ein Federelement 24 angeordnet, welches als spinnenartige Feder ausgebildet ist. Hierdurch kann eine Vorspannung einer die Kapsel abdeckende Folie erreicht werden, sodass die Penetrierung der Folie durch die Penetriereinrichtung 25 zuverlässiger wird. Zudem wird durch das Federelement 24 ein Auswurf der Kapsel nach der Extraktion einer in der Kapsel enthaltenen Substanz verbessert. Ein Getränk wird nach der Extraktion durch den Getränkeauslass 28 aus dem Brühmodul 1 gefördert.

Am ersten Kammerteil 5 ist eine Lippendichtung 31 angeordnet zur zuverlässigen Abdichtung des ersten Kammerteils 5 und des zweiten Kammerteils 6 gegeneinander in der Schliessstellung.

Der Hebelarm 12 des Kniehebelgelenks 11 ist an der ersten Drehachse 13 und der zweiten Drehachse 14 schwimmend gelagert. Hierzu weist der Hebelarm 12 jeweils Langlöcher 27 auf. In dem Langloch 27, in das die erste Drehachse 13 eingesetzt ist, sind zwei Dämpfungselemente 15 bestehend aus Kautschuk eingesetzt. Die Dämpfungselemente 15 gewährleisten weiterhin die schwimmende Lagerung des Hebelarms 12 um die erste Drehachse 13; es wird jedoch eine Detektierung der schwimmenden Lagerung durch einen Benutzer, der den Betätigungshebel 22 greift, vermieden.

Am Hebelarm 12 ist ein als Verrastglied ausgebildeter Nocken 16 angeordnet, der in eine hier nicht dargestellte kurvenbahnförmige Ausnehmung eingreifen kann, die der Zwangsbewegung des Nockens 16 entspricht bei der Bewegung des Injektors von der Offenstellung O in die Schliessstellung.

In Figur 2 ist in perspektivischer Darstellung das erfindungsgemässe Brühmodul 1 gemäss Figur 1 in einer Schliessstellung S dargestellt. Gleiche Referenzzeichen bezeichnen gleiche Merkmale in allen Figuren und werden deshalb nur bei Bedarf erneut erläutert.

In der Schliessstellung S werden das erste Kammerteil 5 und das zweite Kammerteil 6 mittels einer Anpresskraft A gegeneinander gepresst zur Bildung einer Aufnahmekammer 7. Die Anpresskraft A wird in der Schliessstellung S durch den Nocken 16 aufgenommen, der in die hier nicht sichtbare kurvenbahnförmige Ausnehmung in einer Seitenwand des Gestells des Brühmoduls 1 eingreift.

In Figur 3 ist in einer teilgeschnittenen Seitenansicht das Brühmodul 1 gemäss Figur 1 in der Offenstellung dargestellt. In die Positioniereinheit 23 ist eine Kapsel 2 eingesetzt.

Das zweite Kammerteil 6 weist eine Austrittsöffnung 9 auf zur Abführung des aufgebrühten Getränks. Am Boden des Kammerteils 6 ist eine Filterplatte 34 eingesetzt, die mit Penetrationselementen 35 versehen ist. Auch hier sorgt eine zentrale Schraubendruckfeder 36 für ein zuverlässiges Ausstossen der Kapsel 2 nach dem Brühvorgang.

In den Figuren 4-6 ist das erfindungsgemässe Brühmodul 1 gemäss Figur 1 in einer Seitenansicht dargestellt, wobei in den Figuren 4-6 eine Seitenwand 10 des Gestells 32 (Figur 1) sichtbar ist.

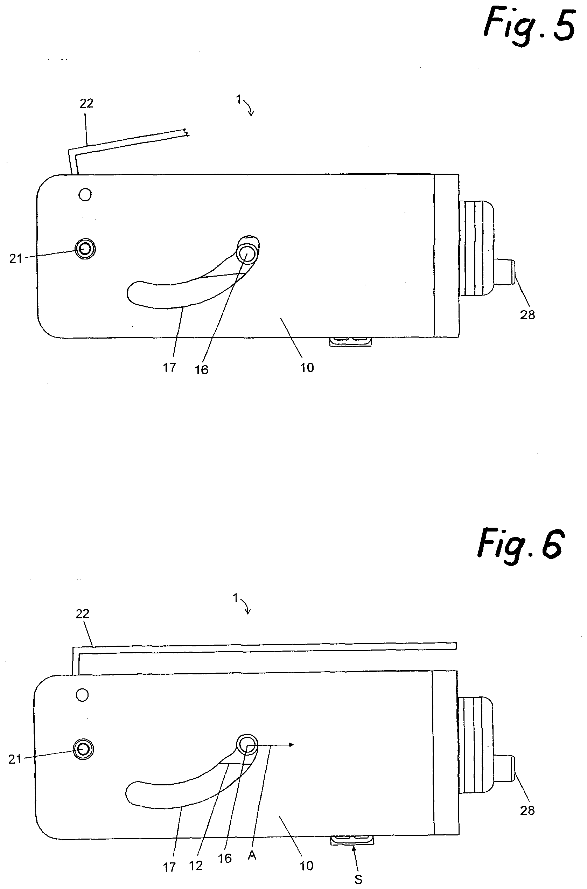

In der Seitenwand 10 ist eine als kurvenbahnförmige Ausnehmung 17 ausgebildete Verrasteinrichtung für den Nocken 16 angeordnet. Der Nocken 16 greift in die kurvenbahnförmige Ausnehmung 17 ein. Während des Schliessvorgangs des Brühmoduls 1 von der Offenstellung O in die Schliessstellung S bewegt sich der Nocken 16 entlang der kurvenbahnförmigen Ausnehmung 17. In Figur 5 befindet sich das Brühmodul 1 in einer Zwischenstellung, wobei während des Betätigens des Betätigungshebels 22 der Nocken 16 entlang der kurvenbahnförmigen Ausnehmung 17 bewegt wurde.

In Figur 6 befindet sich das Brühmodul 1 in der Schliessstellung S, wobei die Anpresskraft A zum Anpressen des ersten Kammerteils und des zweiten Kammerteils gegeneinander im Wesentlichen durch die Seitenwand 10 aufgenommen ist. Hierzu sind der Nocken 16 und die kurvenbahnförmige Ausnehmung 17 so ausgebildet, dass in der Schliessstellung der Nocken 16 und die Ausnehmung 17 im Formschluss zueinander angeordnet und verrastet sind zur Aufnahme der Anpresskraft A. Somit sind der zwischen dem Betätigungshebel 22 (Antriebsglied) und dem Hebelarm 12 (Abtriebsglied) angeordnete weitere Hebelarm und die feste Getriebeachse 21 im Wesentlichen von der Anpresskraft entkoppelt, wobei die Anpresskraft A im Wesentlichen durch die Seitenwand 10 aufgenommen wird.

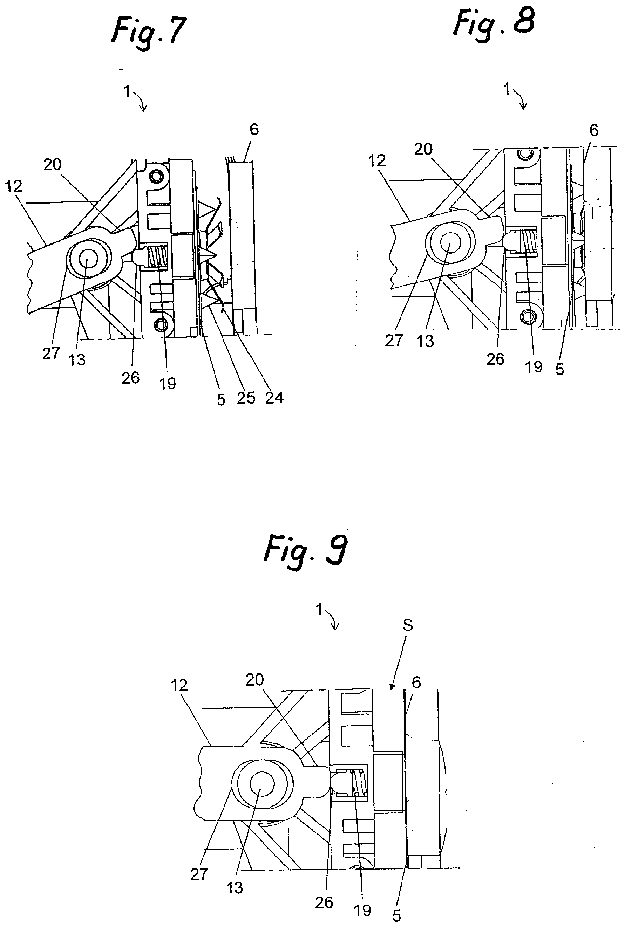

In den Figuren 7-9 ist eine Sequenz von Positionen eines Ausschnitts des Brühmoduls 1 gemäss Figur 1 in einer Seiteansicht dargestellt.

In Figur 7 ist eine Position des Brühmoduls 1 dargestellt, in der der Hebelarm 12 aus der Offenstellung in Richtung der Schliessstellung des Brühmoduls 1 bewegt wurde. Ein am Hebelarm 12 angeordneter Vorsprung 20 kommt in einem Abschnitt während der Bewegung in die Schliessstellung mit dem Kopf 26 in Kontakt, der auf einem elastischen Element 19 angeordnet ist. Das elastische Element 19 ist als Feder ausgebildet.

Auf der dem Kopf 26 zugewandten Seite des Vorsprungs 20 ist der Vorsprung 20 abgerundet ausgebildet, derart, dass der Vorsprung 20 und der Kopf 26 nicht miteinander verkanten. Der Kopf 26 weist in dem dem Vorsprung 20 zugewandten Bereich eine halbkreisförmige Oberfläche auf.

In Figur 8 wurde der Hebelarm 12 gegenüber der Figur 7 weiter bewegt, sodass das elastische Element 19 komprimiert wird.

In Figur 9 befindet sich das Brühmodul 1 in der Schliessstellung S, in der das elastische Element die maximale Kompression erreicht. Die Kompression des elastischen Elements 19 ist dabei abhängig von der Anwesenheit einer Kapsel in der Aufnahmekammer. Bei Anwesenheit einer Kapsel in der Aufnahmekammer ist die Kompression des elastischen Elements 19 grösser als bei Abwesenheit einer Kapsel in der Aufnahmekammer.

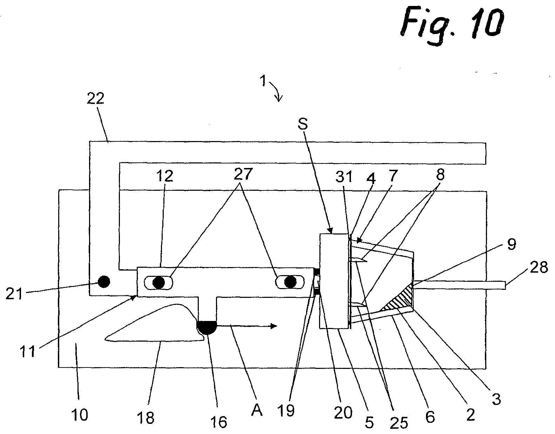

In Figur 10 ist in schematischer Darstellung eine Seitenansicht eines alternativen erfindungsgemässen Brühmoduls dargestellt.

An einer Seitenwand ist ein Anschlag 18 angeordnet, auf dem ein Nocken 16 führbar ist. Das dargestellte Brühmodul 1 befindet sich in einer Schliessstellung S, wobei ein erstes Kammerteil 5 und ein zweites Kammerteil 6 mittels einer Anpresskraft A gegeneinander gepresst werden. Die Anpresskraft A wird durch den - Anschlag 18 aufgenommen. In der Schliessstellung S sind der - Anschlag 18 und der Nocken 16 im Formschluss zueinander angeordnet und verrastet zur Aufnahme der Anpresskraft A. Somit ist eine zwischen dem Betätigungshebel 22 (Antriebsglied) und dem Hebelarm 12 (Abtriebsglied) angeordnete feste Getriebeachse 21 eines Kniehebelgelenks 11 von der Anpresskraft A entkoppelt.

Der Anschlag 18 ist einstückig mit einer Seitenwand 10 des Brühmoduls 1 ausgebildet, wobei der Anschlag 18 mittels eines Spritzgussverfahrens auf der Seitenwand 10 hergestellt wurde. Die Seitenwand 10 nimmt somit die Anpresskraft A in der Schliessstellung auf.

Der Hebelarm 12 weist auf der dem ersten Kammerteil 5 zugewandten Seite einen Vorsprung 20 auf. Am Vorsprung 20 ist ein elastisches Element 19 angeordnet, dass mit dem Kammerteil 5 wechselwirkt und in der Schliessstellung S komprimiert ist. In der vorliegenden Ausführungsform ist kein elastisches Element an dem ersten Kammerteil 5 angeordnet.

Das erste Kammerteil 5 und das zweite Kammerteil 6 bilden eine Aufnahmekammer 7, in der eine in einer Kapsel 2 enthaltene Substanz 3 angeordnet ist. Die Kapsel 2 ist in einer teilgeschnittenen Darstellung gezeigt. Die Kapsel 2 wird in der Aufnahmekammer 7 an einem Flansch 4 eingeklemmt.

Das erste Kammerteil 5 ist als Injektor ausgebildet mit einer Penetriereinrichtung 25. Die Penetriereinrichtung 25 weist Eintrittsöffnungen 8 auf, durch die das flüssige Medium in die Aufnahmekammer 7 förderbar ist zur Extraktion der Substanz 3. Bei Verwendung von Kaffee als extrahierbare Substanz 3 kann dieser durch Zuführung von heissem Wasser als flüssiges Medium aufgebrüht werden zur Herstellung eines heissen Kaffeegetränks.

Das hergestellte Getränk wird durch eine Austrittsöffnung 9 aus der Aufnahmekammer 7 abgeführt und verlässt das Brühmodul durch einen Getränkeauslass 28.

## Patentansprüche

1. Brühmodul (1) zum Zubereiten eines Getränks aus einer in einer Portionsverpackung, insbesondere in einer Kapsel (2), enthaltenen Substanz (3), mit einem flüssigen Medium, umfassend ein Gestell, insbesondere mit zumindest einer Wand, in dem ein erstes Kammerteil (5) und ein zweites Kammerteil (6) angeordnet sind und mittels einer Betätigungseinrichtung zwischen einer Offenstellung (O) und einer Schliessstellung (S) relativ zueinander beweglich sind, wobei die zwei Kammerteile (5, 6) mittels einer Anpresskraft (A) unter Vorspannung in der Schliessstellung (S) gegeneinander pressbar sind zur Bildung einer Aufnahmekammer (7) für die Portionsverpackung, wobei die Aufnahmekammer (7) wenigstens eine Eintrittsöffnung (8) und wenigstens eine Austrittsöffnung (9) aufweist und das flüssige Medium in der Schliessstellung (S) durch die Portionsverpackung durchleitbar ist, wobei die Betätigungseinrichtung ein Getriebe mit einem Antriebsglied und einem Abtriebsglied aufweist, wobei das Getriebe und das Gestell derart miteinander verrastbar sind, dass in der Schliessstellung (S) die Anpresskraft (A) im Wesentlichen durch das Gestell aufnehmbar ist, **dadurch gekennzeichnet, dass** in der Schliessstellung (S) ein zwischen dem Antriebsglied und dem Abtriebsglied angeordnetes Getriebeglied, insbesondere eine feste Getriebeachse (21), von der Anpresskraft (A) entkoppelt ist oder im Wesentlichen entkoppelt ist, wobei insbesondere das Abtriebsglied mit dem Gestell verrastbar ist,
wobei das Getriebe ein Gelenk, insbesondere ein Kniehebelgelenk (11), mit einem Hebelarm (12) umfasst,
der Hebelarm (12) schwimmend gelagert ist,
am und/oder im Hebelarm (12) zumindest ein Dämpfungselement (15) angeordnet ist zur Dämpfung des Spiels des Hebelarms (12) durch die schwimmende Lagerung.

2. Brühmodul (1) nach Anspruch 1, **dadurch gekennzeichnet, dass** der Hebelarm (12) als das mit einem der Kammerteile (5, 6) verbundene Abtriebsglied ausgebildet ist.

3. Brühmodul (1) nach Anspruch 2, **dadurch gekennzeichnet, dass** der Hebelarm (12) an einer ersten Drehachse (13) und/oder an einer zweiten Drehachse (14) schwimmend gelagert ist.

4. Brühmodul (1) nach Anspruch 2 oder 3, **dadurch gekennzeichnet, dass** der Hebelarm (12) im Wesentlichen parallel zur Längsachse (L) des Hebelarms (12) schwimmend gelagert ist.

5. Brühmodul (1) nach einem der Ansprüche 2 bis 4, **dadurch gekennzeichnet, dass** das zumindest eine Dämpfungselement (15) ein elastisches Material, bevorzugt Kautschuk, umfasst und insbesondere an der ersten Drehachse (13) und/oder an der zweiten Drehachse (14) angeordnet ist.

6. Brühmodul (1) nach einem der Ansprüche 2 bis 5, **dadurch gekennzeichnet, dass** am Hebelarm (12) zumindest ein Verrastglied, insbesondere ein Nocken (16), angeordnet ist, das mit einer an dem Gestell angeordneten Verrasteinrichtung für das Verrastglied zumindest in der Schliessstellung in Wirkverbindung steht zum Verrasten des Getriebes über den Hebelarm (12) mit dem Gestell.

7. Brühmodul (1) nach Anspruch 6, **dadurch gekennzeichnet, dass** die Verrasteinrichtung derart ausgebildet ist, dass in der Schliessstellung (S) das Verrastglied und die Verrasteinrichtung im Formschluss zueinander angeordnet sind zur zumindest teilweisen Aufnahme der Anpresskraft (A).

8. Brühmodul (1) nach Anspruch 6 oder 7, **dadurch gekennzeichnet, dass** die Verrasteinrichtung als insbesondere kurvenbahnförmige Ausnehmung (17) für das Verrastglied in dem Gestell ausgebildet ist.

9. Brühmodul (1) nach Anspruch 6 oder 7, **dadurch gekennzeichnet, dass** die Verrasteinrichtung als insbesondere kurvenflankenförmiger Anschlag (18) für das Verrastglied ausgebildet ist.

10. Brühmodul (1) nach Anspruch 9, **dadurch gekennzeichnet, dass** der Anschlag (18) fest mit dem Gestell verbunden ist und insbesondere einstückig mit dem Gestell ausgebildet ist, wobei der Anschlag (18) bevorzugt mittels eines Spritzgussverfahrens hergestellt ist.

11. Brühmodul (1) nach einem der Ansprüche 2 bis 10, **dadurch gekennzeichnet, dass** am Hebelarm (12) und/oder an dem mit dem Hebelarm (12) verbundenen Kammerteil (5, 6) ein elastisches Element (19) zur Aufrechterhaltung einer minimalen Anpresskraft (A) derart angeordnet ist, dass die Aufnahmekammer (7) mit oder ohne in der Aufnahmekammer (7) eingesetzter Portionsverpackung in der Schliessstellung (S) abdichtbar ist.

12. Brühmodul (1) nach Anspruch 11, **dadurch gekennzeichnet, dass** der Hebelarm (12) an dem dem Kammerteil (5, 6) zugewandten Ende einen Vorsprung (20) aufweist und dass bevorzugt das elastische Element (19) an dem Kammerteil (5, 6) angeordnet ist, wobei der Vorsprung (20) in einem Abschnitt während der Bewegung in die Schliessstellung (S) mit dem elastischen Element (19) wechselwirkt und dieses zumindest teilweise komprimiert.

13. Brühmodul (1) nach Anspruch 11 oder 12, **dadurch gekennzeichnet, dass** das elastische Element (19) an dem Vorsprung (20) angeordnet ist, wobei das elastische Element (19) zumindest in einem Abschnitt während der Bewegung in die Schliessstellung (S) mit dem Kammerteil (5, 6) wechselwirkt und das elastische Element (19) zumindest teilweise komprimiert.

14. System umfassend eine Kapsel (2) und ein Brühmodul (1) gemäss einem der vorstehenden Ansprüche zum Zubereiten eines Getränks aus einer in der Kapsel (2) enthaltenen Substanz (3).

15. Verwendung einer Kapsel (2) mit einem Flansch (4) enthaltend eine Substanz zum Zubereiten eines Getränks, insbesondere von Kaffee oder Tee, mittels einer Flüssigkeit in einem Brühmodul (1) gemäss einem der Ansprüche 1 bis 13.

## Claims

1. Brewing module (1) for preparing a beverage from a substance (3) which is contained in a portion pack, in particular in a capsule (2), using a liquid medium, comprising a frame, in particular with at least one wall, in which a first chamber part (5) and a second chamber part (6) are arranged and can be moved relative to one another between an open position (O) and a closed position (S) by means of an operating device, wherein the two chamber parts (5, 6) can be pressed against one another by means of a contact-pressure force (A) under prestress in the closed position (S) in order to form a receiving chamber (7) for the portion pack, wherein the receiving chamber (7) has at least one inlet opening (8) and at least one outlet opening (9) and the liquid medium can be conducted through the portion pack in the closed position (S), wherein the operating device has a gear mechanism with a drive member and an output drive member, wherein the gear mechanism and the frame can be latched to one another in such a way that the contact-pressure force (A) can be substantially absorbed by the frame in the closed position (S), **characterized in that**, in the closed position (S), a gear mechanism member, in particular a fixed gear mechanism shaft (21) which is arranged between the drive member and the output drive member is decoupled or substantially decoupled from the contact-pressure force (A), wherein the output drive member can be latched to the frame in particular wherein the gear mechanism comprises a joint, in particular a a toggle lever joint (11),
the lever arm (12) is mounted in a floating manner,
at least one damping element (15) is arranged on and/or in the lever arm (12) for the purpose of damping the play of the lever arm (12) due to the said lever arm being mounted in a floating manner.

2. Brewing module (1) according to Claim 1, **characterized in that** the lever arm (12) is designed as the output drive member which is connected to one of the chamber parts (5, 6).

3. Brewing module (1) according to Claim 2, **characterized in that** the lever arm (12) is mounted in a floating manner on a first rotation axis (13) and/or on a second rotation axis (14).

4. Brewing module (1) according to Claim 2 or 3, **characterized in that** the lever arm (12) is mounted in a floating manner substantially parallel to the longitudinal axis (L) of the lever arm (12).

5. Brewing module (1) according to one of Claims 2 to 4, **characterized in that** the at least one damping element (15) comprises an elastic material, preferably rubber, and is arranged in particular on the first rotation axis (13) and/or on the second rotation axis (14) .

6. Brewing module (1) according to one of Claims 2 to 5, **characterized in that** at least one latching member, in particular a cam (16), is arranged on the lever arm (12), the said latching member being operatively connected to a latching device, which is arranged on the frame, for the latching member at least in the closed position for the purpose of latching the gear mechanism to the frame by means of the lever arm (12).

7. Brewing module (1) according to Claim 6, **characterized in that** the latching device is designed in such a way that, in the closed position (S), the latching member and the latching device are arranged with an interlocking connection in relation to one another for the purpose of at least partially absorbing the contact-pressure force (A).

8. Brewing module (1) according to Claim 6 or 7, **characterized in that** the latching device is designed as a recess (17), in particular in the form of a curved path, for the latching member in the frame.

9. Brewing module (1) according to Claim 6 or 7, **characterized in that** the latching device is designed as a stop (18), in particular in the form of a curved flank, for the latching member.

10. Brewing module (1) according to Claim 9, **characterized in that** the stop (18) is fixedly connected to the frame and, in particular, is integrally formed with the frame, wherein the stop (18) is preferably produced by means of an injection-moulding method.

11. Brewing module (1) according to one of Claims 2 to 10, **characterized in that** an elastic element (19) for maintaining a minimum contact-pressure force (A) is arranged on the lever arm (12) and/or on the chamber part (5, 6) which is connected to the lever arm (12) in such a way that the receiving chamber (7) can be sealed off with or without the portion pack being inserted in the receiving chamber (7) in the closed position (S).

12. Brewing module (1) according to Claim 11, **characterized in that** the lever arm (12) has a projection (20) at that end which faces the chamber part (5, 6), and **in that** the elastic element (19) is preferably arranged on the chamber part (5, 6), wherein the projection (20) interacts with the elastic element (19) in one section during the movement into the closed position (S) and at least partially compresses the said elastic element.

13. Brewing module (1) according to Claim 11 or 12, **characterized in that** the elastic element (19) is arranged on the projection (20), wherein the elastic member (19) interacts with the chamber part (5, 6) at least in one section during the movement into the closed position (S) and at least partially compresses the elastic element (19).

14. System comprising a capsule (2) and a brewing module (1) according to one of the preceding claims for preparing a beverage from a substance (3) which is contained in the capsule (2).

15. Use of a capsule (2) comprising a flange (4) containing a substance for preparing a beverage, in particular coffee or tea, using a liquid in a brewing module (1) according to one of Claims 1 to 13.

## Revendications

1. Module d'infusion (1) pour préparer une boisson à partir d'une substance (3) contenue dans un emballage en portion, en particulier dans une capsule (2), avec un milieu fluide, comprenant un bâti, en particulier avec au moins une paroi, dans lequel sont disposées une première partie de chambre (5) et une deuxième partie de chambre (6) qui sont déplaçables l'une par rapport à l'autre au moyen d'un dispositif d'actionnement entre une position d'ouverture (O) et une position de fermeture (S), les deux parties de chambre (5, 6) pouvant être pressées l'une contre l'autre au moyen d'une force de pression (A) avec précontrainte dans la position de fermeture (S) pour former une chambre de réception (7) pour l'emballage en portion, la chambre de réception (7) présentant au moins une ouverture d'entrée (8) et au moins une ouverture de sortie (9) et le milieu fluide pouvant être conduit dans la position de fermeture (S) à travers l'emballage en portion, le dispositif d'actionnement présentant une transmission avec un organe d'entraînement et un organe de prise de force, la transmission et le bâti pouvant être encliquetés l'un avec l'autre de telle sorte que dans la position de fermeture (S), la force de pression (A) puisse être reçue essentiellement par le bâti, **caractérisé en ce que** dans la position de fermeture (S), un organe de transmission disposé entre l'organe d'entraînement et l'organe de prise de force, en particulier un axe de transmission fixe (21), est désaccouplé de la force de pression (A) ou est essentiellement désaccouplé de celle-ci, l'organe de prise de force pouvant notamment être encliqueté avec le bâti
la transmission comprend une articulation, en particulier une articulation à genouillère (11), avec un bras de levier (12),
le bras de levier (12) est supporté de manière flottante,
qu'au moins un élément d'amortissement (15) est disposé au niveau du bras de levier (12) et/ou dans celui-ci pour l'amortissement du jeu du bras de levier (12) par le support sur palier flottant.

2. Module d'infusion (1) selon la revendication 1, **caractérisé en ce que** le bras de levier (12) étant réalisé en tant que l'organe de prise de force connecté à l'une des parties de chambre (5, 6).

3. Module d'infusion (1) selon la revendication 2, **caractérisé en ce que** le bras de levier (12) est supporté de manière flottante au niveau d'un premier axe de rotation (13) et/ou au niveau d'un deuxième axe de rotation (14).

4. Module d'infusion (1) selon la revendication 2 ou 3, **caractérisé en ce que** le bras de levier (12) est supporté de manière flottante essentiellement parallèlement à l'axe longitudinal (L) du bras de levier (12).

5. Module d'infusion (1) selon l'une quelconque des revendications 2 à 4, **caractérisé en ce que** l'au moins un élément d'amortissement (15) comprenant un matériau élastique, de préférence du caoutchouc, et est disposé en particulier au niveau du premier axe de rotation (13) et/ou au niveau du deuxième axe de rotation (14).

6. Module d'infusion (1) selon l'une quelconque des revendications 2 à 5, **caractérisé en ce qu'**au moins un organe d'encliquetage, en particulier une came (16), est disposé au niveau du bras de levier (12), lequel ou laquelle est en liaison fonctionnelle au moins dans la position de fermeture avec un dispositif d'encliquetage pour l'organe d'encliquetage disposé sur le bâti en vue de l'encliquetage de la transmission avec le bâti par le biais du bras de levier (12).

7. Module d'infusion (1) selon la revendication 6, **caractérisé en ce que** le dispositif d'encliquetage est réalisé de telle sorte que dans la position de fermeture (S), l'organe d'encliquetage et le dispositif d'encliquetage soient disposés en engagement par correspondance de formes l'un avec l'autre pour recevoir au moins en partie la force de pression (A).

8. Module d'infusion (1) selon la revendication 6 ou 7, **caractérisé en ce que** le dispositif d'encliquetage est réalisé en tant qu'évidement (17) notamment en forme de piste de came pour l'organe d'encliquetage dans le bâti.

9. Module d'infusion (1) selon la revendication 6 ou 7, **caractérisé en ce que** le dispositif d'encliquetage est réalisé en tant que butée notamment en forme de flanc de came (18) pour l'organe d'encliquetage.

10. Module d'infusion (1) selon la revendication 9, **caractérisé en ce que** la butée (18) est connectée fixement au bâti et est réalisée notamment d'une seule pièce avec le bâti, la butée (18) étant de préférence fabriquée au moyen d'un procédé de moulage par injection.

11. Module d'infusion (1) selon l'une quelconque des revendications 2 à 10, **caractérisé en ce qu'**un élément élastique (19) est disposé pour maintenir une force de pression minimale (A) au niveau du bras de levier (12) et/ou au niveau de la partie de chambre (5, 6) connectée au bras de levier (12), de telle sorte que la chambre de réception (7) puisse être étanchéifiée dans la position de fermeture (S) avec ou sans emballage de portion inséré dans la chambre de réception (7).

12. Module d'infusion (1) selon la revendication 11, **caractérisé en ce que** le bras de levier (12) présente une saillie (20) au niveau de l'extrémité tournée vers la partie de chambre (5, 6) et **en ce que** de préférence l'élément élastique (19) est disposé au niveau de la partie de chambre (5, 6), la saillie (20) étant en interaction avec l'élément élastique (19) dans une portion pendant le déplacement dans la position de fermeture (S) et comprimant celui-ci au moins en partie.

13. Module d'infusion (1) selon la revendication 11 ou 12, **caractérisé en ce que** l'élément élastique (19) est disposé au niveau de la saillie (20), l'élément élastique (19) étant en interaction avec la partie de chambre (5, 6) au moins dans une portion pendant le déplacement dans la position de fermeture (S) et comprimant l'élément élastique (19) au moins en partie.

14. Système comprenant une capsule (2) et un module d'infusion (1) selon l'une quelconque des revendications précédentes pour préparer une boisson à partir d'une substance (3) contenue dans la capsule (2).

15. Utilisation d'une capsule (2) avec une bride (4) contenant une substance pour préparer une boisson, en particulier du café ou du thé, au moyen d'un liquide dans un module d'infusion (1) selon l'une quelconque des revendications 1 à 13.
